Europäisches Patentamt

European Patent Office

Office européen des brevets

(11) Publication number: **0 122 010**
**B1**

## (12) EUROPEAN PATENT SPECIFICATION

(45) Date of publication of patent specification: **02.11.88**

(21) Application number: **84301424.2**

(22) Date of filing: **05.03.84**

(51) Int. Cl.[4]: **A 01 N 25/34, A 01 N 25/22, A 01 N 25/08, C 05 G 3/00**

(54) **Timed release delivery means for delivery of active agent to spatially separated terrain locations and compositions comprised thereby.**

(30) Priority: **07.03.83 US 472737**
**07.03.83 US 472922**

(43) Date of publication of application:
**17.10.84 Bulletin 84/42**

(45) Publication of the grant of the patent:
**02.11.88 Bulletin 88/44**

(84) Designated Contracting States:
**BE DE FR GB NL**

(56) References cited:
**FR-A-2 498 891**
**GB-A-2 045 221**
**GB-A-2 080 666**
**US-A-3 056 723**

**"Booklet: What Gypsum plasters can do for you"**
**Depliant Altosid**

**The file contains technical information submitted after the application was filed and not included in this specification**

(73) Proprietor: **METROPOLITAN MOSQUITO CONTROL DISTRICT**
**2380 Wycliff Street**
**St. Paul Minnesota 55114 (US)**

(72) Inventor: **Sjogren, Robert D.**
**14 Black Oak Road**
**St. Paul Minnesota 55110 (US)**

(74) Representative: **Silverman, Warren et al**
**HASELTINE LAKE & CO. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 122 010

## Description

This invention relates to compositions for use especially, but not exclusively, in horticulture and agriculture for releasing an agent active in particular, but not exclusively, a pesticide or fertilizer to a required site to achieve slow release of an effective amount of the active agent and achieve the desired action thereof throughout the temperate months, and to means comprising the active agent for delivery of the active agent to the site.

During the temperate months of the year, the population of many pests in portions of the United States reaches levels which causes severe problems. One pest, the mosquito, can be distracting, can cause bites which itch and in certain cases can be a vector for the spread of communicable disease. Mosquito populations vary during the temperate periods of the year depending on rainfall, temperature, and other conditions. While the life span of an adult mosquito is not long, mosquito larvae can continually mature throughout the year into the adult stage, resulting in the continuing resupply of the mosquito population. Many communities have combated mosquito populations by fogging or spraying the environment with insecticide, adding insecticide to likely hatching sites, and by distributing a variety of slow release insecticide compositions into the environment.

Many other pests can cause severe problems during the fair months of the year. Molluscs in both the adult and larval forms can infest fresh water, can damage flora and fauna, can be a disease vector, and can pose cosmetic problems. Fungi and algae can grow rapidly in fresh water and make water unpleasant for the recreational purposes, can produce toxins which can poison farm animals and make water unfit for human consumption. A variety of plants can grow in unwanted areas reducing crop yields and presenting weed control problems in many residential and agricultural environments. Many attempts have been made to combat these pest problems using a variety of pesticides.

Fertilizers are materials added to soils to supply elements required for plant nutrition. They may be products manufactured for the purpose, by-products of the manufacture of other chemicals, or natural materials. Fertilizer consumption has increased rapidly in the last quarter century and fertilizers manufactured for agricultural purposes have become a major product of the chemical industry world-wide.

Plants require several materials for adequate nutrition. The principal ones, carbon dioxide and water, are usually available in adequate amounts from the atmosphere and soil, and are continually replenished by natural means. Other essential nutrients are normally available in the soil but are not replenished by nature after plant utilisation. Agricultural areas can as a result of intensive cultivation be substantially depleted of important nutrients. In addition to carbon, hydrogen and oxygen, 13 nutrients have been identified as essential to plant nutrition, including nitrogen, phosphorus, potassium, calcium, magnesium, sulphur, iron, manganese, copper, zinc, boron, molybdenum and chlorine. Of these elements, nitrogen, phosphorus and potassium are needed by plants in relatively large quantities and are called major elements or macronutrients. Calcium, magnesium and sulphur are normally required in lesser amounts and are considered secondary nutrients, while the remaining elements are known as micronutrients or trace elements because their requirements are very small.

The fertilizer elements discussed above are most commonly applied to the soil in the form of ammonia $(NH_3)$, ammonium nitrate $(NH_4NO_3)$, ammonium sulphate $([NH_4]_2SO_4)$, urea $([NH_2]_2CO)$, sodium nitrate $(NaNO_3)$, calcium nitrate $(Ca(NO_3)_2)$, ammonium chloride $(NH_4Cl)$, monocalcium phosphate $(Ca(H_2PO_4)_2 \cdot H_2)$, dicalcium phosphate $(CaHPO_4)$, potassium chloride $(KCl)$, potassium sulphate $(K_2SO_4)$, monoammonium phosphate $(NH_4)H_2PO_4$, diammonium phosphate $(NH_4)_2HPO_4$, and others.

Pesticides and fertilizers have hitherto been encapsulated in various ways. Thus pesticides have been encapsulated with both macro and microencapsulation processes in ceramic materials biodegradable polymers, porous mineral supports, cellulose derivatives, polyurea compounds, plaster of paris (see for example US—A—3,056,723 and GB—A—2,080,666) and other supports in order to protect the pesticide from the environment and to ensure a controlled release attempting substantial control of pest populations. After substantial experience with a number of these pesticide compositions, it has been found that they fail to provide one or more of the following properties. The pesticide must be released at a rate such that its concentration in the environment is maintained at at least an effective pest control concentration throughout the temperate part of the year in order to control pest populations at the time they appear. The pesticide should be released at an even rate such that significant amounts are not wasted. Pesticides should be protected from the effects of atmospheric oxidation, electromagnetic radiation (light energy or UV radiation) or other factors, which can cause the photochemical decomposition of the pesticide.

Accordingly a substantial need exists for a controlled slow release pesticide composition that can provide substantial control of pest populations throughout the temperate season, can provide a controlled continuous rate of release that maintains for example an effective mosquito controlling concentration of an insecticide effective against mosquitos, and which protects the pesticide from substantial degradation.

Likewise, fertilizers have been encapsulated using resinous encapsulating agents in order to provide slow release of the fertilizer compositions into the environment. However, many of the encapsulation processes produce a product which is prohibitively expensive for agricultural purposes. Most agricultural fertilizers themselves are commodity chemicals which are very low in cost.

One problem that exists with most common fertilizers is that they tend to release nitrogen and other

2

# 0 122 010

fertilizing components rapidly into the soil. The rapid release of the fertilizing components can tend to harm plant roots and stems and can often result in growth of plant parts which are not desirable, such as stems and leaves, at the expense of reduced yield.

Further, many fertilizer compositions such as ammonium nitrate can be explosive in concentrated form. Accordingly, a substantial need exists to provide an encapsulated slow release fertilizer composition means which can release fertilizer elements at a rate such that the plant is not harmed and the fertilizer is utilised by the plant for improving crop yield.

It is an object of the invention to provide compositions which allow reliable controlled release of active agents in delivery means comprising them to be achieved in the temperate months, are inexpensive to produce and which, when containing pesticides are not harmful to non-target organisms.

According to a first aspect of the present invention, there is provided a pulverous composition for admixture with water and casting to undergo hardening in the presence of the water to yield a solid delivery means for controlled slow release of an active agent therein in the presence of environmental water to a site at which the composition, water hardened to form said solid delivery means, is applied, which composition comprises a plaster of paris having a compressive strength of at least $2.52 \times 10^6$ kg/m² (5000 lbs per square inch) when set, an effective electromagnetic radiation-absorbing amount of finely divided carbon particles and an effective amount of the active agent.

In a second aspect, this invention also provides, as a shaped body, solid delivery means for releasing, when in the presence of environmental water, an active agent at a site to which it has been delivered to exert its action at or in the vicinity of the site, which means comprises a composition of the invention which has been cast while in the presence of a plaster hardening amount of water. When containing a fertilizer composition as active agent, the delivery means is in the form of a shaped body which has a surface area of from 50 to 3500 mm². When containing a pest control agent as active agent, the delivery means is in the form of a shaped body which has a surface area of from 500 to 50,000 mm².

Finally this invention provides a method of controlling pest populations or of fertilizing agricultural land which comprises distributing such solid delivery means to a habitat for a pest population or an agricultural or horticultural environment respectively.

If containing a pesticide, delivery means produced from compositions of this invention can provide efficient control of pest populations throughout the temperate season while protecting the pesticide from the harmful effects of electromagnetic radiation. If containing a fertilizer, delivery means produced from fertilizer-containing compositions can provide efficient release and fertilization to plants during the temperate season. The delivery means produced from novel slow release compositions of this invention can be in a variety of forms such as spheres, cylinders, polyhedra or blocks to be distributed in the environment. For reasons of ease of manufacture and controlled decomposition, the delivery means are most commonly in the form of a cylinder or truncated cone (a tapered cylinder) which slowly decomposes by dissolution in environmental moisture through the temperate season until it is substantially gone. An encapsulated slow release pest control agent in combination with plaster (gypsum cement) provides a continual smooth release of the pest control agent at a constant rate resulting in the constant effective pest controlling concentration of the pest control agent in the environment without releasing intermittently excessive amounts of pest control agent. The plaster tends to dissolve at a near steady rate in the presence of environmental water, releasing encapsulated pest control agent into the environment. A fertilizer composition in combination with plaster or gypsum cement provides a continual smooth release at a constant rate resulting in the constant effective fertilizing concentration of fertilizer elements in the environment without releasing intermittently excessive amounts of fertilizer elements.

For a pesticide composition, decomposition is most effective when the pest control means is fully immersed in environmental water. The carbon in combination with the pest control agent both protects unreleased pest control agent from the harmful effects of the electromagnetic radiation and at the same time acts as a secondary release mechanism as the absorbed concentrated pest control agent re-releases slowly from the carbon particle, resulting in a more constant rate of release of the insecticide. The nature of the carbon particles is such that they can absorb substantial quantities of the impinging ultraviolet light before it can penetrate the pest control means degrading the pest control agent. Further, carbon particles have a large surface area which can absorb the excess pest control agent as it is released, smoothing the release of the pest control agent into the environment. Accordingly, each of the components of the composition cooperates with the other components, protecting pest control agent from the harmful effects of electromagnetic radiation and providing pest control during the entire pest season. It should be clearly understood that by the term pest, is meant any living organism whether plant, animal or microbe, whose presence causes human discomfort, harm to agriculture, a health hazard, or cosmetic harm. The term pesticide means any chemical agent effective in pest control, that operates to control pest populations which prevents maturation or reproduction, or which kills the pest with toxic effects.

With fertilizer compositions, it is intended that the plaster dissolve at a near steady rate in the presence of environmental water, releasing fertilizer into the environment. The dissolution is most effective when the fertilizer composition is fully below the surface of the cultivated farm area in contact with natural water which resides between soil particles. The soil water, by osmotic or capillary action, migrates into the fertilizer release means and begins to dissolve the plaster. As the plaster is removed by water action the fertilizer is revealed and is released depending on the rate the plaster is dissolved. The carbon acts as a

3

secondary release mechanism. As the fertilizer is absorbed and re-releases slowly from the carbon particle, a more constant rate of release of the fertilizer results. Further, carbon particles have a large surface area which can absorb the excess fertilizer as it is released, smoothing its release into the environment. Accordingly, each of the components of the fertilizer composition cooperates with the other components, providing smooth, effective fertilizer release during the entire pest season.

Briefly, the compositions of this invention comprise a preferably encapsulated active agent (see the foregoing discussion with reference to the prior art), a specific high strength plaster (also known as gypsum cement or plaster of paris) composition, and finely divided carbon particles. Delivery means for the composition must have a specific surface area to provide an effective concentration of active agent. The components of the composition will now be described in detail.

Pesticide

As already indicated, the term pesticide as employed here is intended to include any active material used for control of unwanted plants, animals, or microorganisms, such as mosquitoes, fungi, algae, snails, weeds, including in particular insecticides, biocides, and other materials utilisable in the environment.

A great variety of insecticides can be used which are compatible with the plaster and carbon particle components of the invention. Representative of the pesticides which may be employed as starting materials in the invention are disclosed by way of example in U.S. Patent 4,225,693 and include, in general, the following classes. Triazole insecticides, arsenic based insecticides, sulphonyl carbamate insecticides, thiazine insecticides, benzonitrile insecticides, which are set forth in column 3, lines 21—70, column 4, 5 and 6, lines 1—10. Indeed, however, any insecticides having insect control properties which can be compatible with plaster and carbon can be used in the invention.

The pesticides which are preferred for use in the invention are trichloroacetic acid, 2,5-dichlorophenoxyacetic acid and 2,4-DW, as relatively new pesticide 4 - amino - 6 - tertiary butyl - 3 - (methylthio) - AS - triazine - 5(4HN) - one, which is available under the name Metabucin. The most preferred mosquito insecticide comprises isopropyl(2E,4E) - 11 - methoxy - 3,7,11 - trimethyl - 2,4 - dodecadienoate, which is the active ingredient in the composition, available under the trade name Altosid® SR-10 from Zoecon Corp. Altosid SR-10 is an insect specific growth regulator that acts to prevent the emergence of adult mosquitoes from the pupae stage by affecting the maturation process and is not a nondiscriminant toxin.

Many fungi can be controlled using the pest control means of this invention in a variety of environments, including agricultural and industrial applications. In agricultural applications fungi can often harm the maturation of agricultural plants or animals, resulting in the loss of valuable commodities. In industrial applications, fungi often grow in places where water accumulates such as cooling towers, streams, tanks, filtration mechanisms, causing plugging, odour problems. Fungal control agents which can be used in the pest control means of the invention include sulphur, polysulphides, heavy metal fungicides, such as copper based, arsenic based, and mercury based fungicides, including for example copper hydroxide, copper carbonate, cuprous oxide, O-(chloromercury)phenol, cresylmercuric cyanide, methyl-mercuric - 8 - hydroxy quinolate, phenyl mercuric acetate, and phenyl N - (ethylmercury) - paratoluene sulphonamide; organic fungicides such as quinones, such as chlorinel and dichlone. Organic sulphur based fungicides include ferric dimethyl dithiocarbamate, zinc dimethyl dithiocarbamate, and sodium methyl dithiocarbamate; and other classes of organic fungicides including imidazoline based fungicides, quinoline based fungicides and trichloromethyl thiodicarboxamide based fungicides.

Molluscicides can be incorporated into the pest control composition of the invention. Molluscs are invertebrates which comprise snails, slugs, oysters, mussels, cuttle fish, squid, and other animals. Molluscs such as snails and slugs can attack crops, flower gardens, and other molluscs infest fresh water and can be the vector for a variety of disease causing parasites. Molluscicides useful in the invention include metaldehyde, antimony based molluscicides, carbamate based molluscicides such as isolayn or sectraon. Molluscicides that can be used include copper sulphate, copper dimethyl dithiocarbamate, dinitrophenol based molluscicides such as 2,4-dinitro cresol and any other molluscicide that can be incorporated without adverse effect into the composition of the invention.

Herbicides that can be used to control effectively unwanted plants in residential or agricultural environments are well known chemical herbicides that kill growing plants or prevent seed germination of plant growth. Most useful herbicides belong to compound classes including the phenoxy alkanoic acids such as 2,4-D, 2,4,5-T, 2,4-DD, MCPA; the S-triazines, cymazines, detrazine, propazene; the phenyl carbamates, IPC, CIPC, barban; the clorinated aliphatic acids, delapon, TCA; the phenylureas (fenuron, monuron, diuron); the dinitrobenzenes (DNBP, trifluoralin, benefin); the benzoic acids, amiben, 2,3,6-TBA; the dipyridyls (paraquat, diquat); and the dithiocarbamates, EPTC, and vernolate.

Algicides can also be incorporated into the slow release pest control means of the invention. A variety of both organic and aeroganic algicides are well known in the art.

Fertilizer

The major emphasis of developing modern fertilizers is the determination of the most effective and economical means for supplying the nutrient elements. Most elements are supplied as compounds rather than in elementary form. Since compounds containing the elements are less expensive and more suitable for plant use, the major emphasis on the consumption of macro-nutrients in agriculture is directed to nitrogen, phosphorus and potassium nutrients, even though other nutrients are essential to plant growth.

Nitrogen is supplied either in the form of an ammonia compound or in a nitrate compound. In general agricultural practice, there is little difference between the ammonia or nitrate form. Nitrifying bacteria are common in most soils and transform ammonia or ammonium species to nitrates rapidly. Problems with commercially important nitrogen materials include caking, hygroscopicity, fire and detonation hazards, nitrogen loss after application and nonuniform release of nitrogen to the plant during the growing period.

Phosphates are commonly supplied to the plant in two major forms, as a calcium phosphate or as an ammonium phosphate, usually ammonium diphosphate. Calcium phosphate has been in use for many years in the form of "Superphosphate", and was the first commercial fertilizer of importance. Ammonium phosphates are relatively new materials developed during the 50's and are low in cost and high in nutrient value. A particularly suitable material to use is ammoniated superphosphate, i.e. superphosphate containing 5% by weight ammonia.

The source of fertilizer potassium is most commonly potash, since potash compounds are available in natural deposits around the world, and is satisfactory for use as mined. Potash is relatively soluble and readily absorbed by plants without further treating. However, many other potassium materials such as potassium sulphate, potassium nitrate and others are available if needed.

Secondary nutrients such as calcium, magnesium, and sulphur can be important if the soil is substantially depleted of these nutrients. Micro-nutrients including boron, chlorine, copper, iron, manganese, molybdenum, and zinc are usually supplied as soluble salts. However less soluble forms such as chelated and glass forms of the micro-nutrient compounds have been used.

Plaster

Dehydration of gypsum (calcium sulphate dihydrate, $CaSO_4 \cdot 2H_2O$) in an open kettle by direct heating in the range of 198.9—298.9°C (390—570°F) will result in *beta*-calcium sulphate hemihydrate, $CaSO_4 \cdot 0.5H_2O$ commonly called plaster of paris and hereinafter referred to simply as plaster. Typically the plaster crystals are long, needle-like, irregular in shape and porous. The shape and porosity of the crystalline particles results in high water absorbency. The powder, when mixed with water, will require about 60 parts of water to about 100 parts of plaster to give a "workable" consistency. Plasters can contain a variety of additives which provide properties such as wettability, strength, hardening rate, particle size, and low viscosity slurries.

Preferred plaster compositions having a controlled rate of disintegration or deterioration in the environment comprise plasters with a certain compressive strength. These plasters can slowly disintegrate over a time period of 120 to 180 days and can expose the pesticides into the environment during the decomposition period.

The plasters for making the compositions of this invention comprise a high density, high compressive strength plaster having a density usually of at least 1,600 grams per litre and compressive strength of at least $3.52\times10^6$ kg/m², (5,000 lbs per square inch) preferably $6.33\times10^6$ to $1.06\times10^7$ kg/m², (9,000—15,000 lbs per square inch) more preferably $7.03\times10^6$ to $9.84\times10^6$ kg/m², (10,000—14,000 lbs per square inch), for reasons of its slow decomposition in the environment, resulting in the extended lifetime of the composition in the environment and a sufficient concentration of active agent throughout the temperate season. Such plasters are also known as gypsum cements.

While there is no wish to be held to a theory of action of the composition and delivery means of this invention, it is believed that the high density, high compressive strength of the plaster is a result of the crystal structure of the calcium sulphate hydrate that makes up the plaster. The crystal structure of high compressive strength plaster results in a controlled steady state rate of solubility which in turn controls the release of the active agent. The crystals in the plaster appear to overlap and interact, resulting in a high density plaster having increased compressive strength and a controlled rate of solubility resulting from the crystal structure. These properties appear to be essential in providing the controlled solubility and controlled release of the active agents.

Carbon

Finely divided carbon compositions useful in the invention for making the delayed released active agent composition of the invention are carbon compositions having large surface area and small particle size, providing the electromagnetic radiation protection and the release smoothing properties. As a delivery means comprising the slow release composition decomposes, the active agent is released. The carbon in the composition tends to smooth the release rate by absorbing extra concentrations of pest control agent when the release rate is high and by releasing or desorbing the active agent when the release rate is low.

Insofar as pesticide compositions, in particular, are concerned, the carbon particles in combination with the preferably encapsulated or micro-encapsulated pesticide also appear to control the release locus of the pesticide. When added to water, objects with a specific gravity substantially less than 1.0 tend to float while those with a greater specific gravity tend to sink. Many pesticide compositions have a specific gravity substantially less than 1.0 which results in the pesticide floating to the surface where it can be rapidly degraded by contact with light and air. By using pesticides in combination with carbon, a product having a

# 0 122 010

specific gravity greater than 1 results so that the plaster-carbon-pesticide combination maintains a constant depth or sinking to the bottom where it can be released. By adjusting the specific gravity of the plaster-carbon-pesticide combination the speed with which the pesticide reaches the surface of the body of water can be closely controlled. In general, the carbon particles also protect the insecticide by absorbing electromagnetic radiation commonly in the form of ultraviolet radiation and preventing the deterioration of the insecticide through the effects of such radiation.

Whether for pesticide or fertilizer compositions, accordingly, preferred particulate carbon useful in the invention has large surface area and small particle size as found in carbon sources such as activated carbon, finely divided charcoal, etc. Further details of sources of finely divided carbon are found in Kirk-Othmer Encyclopedia of Chemical Technology, Second Edition, Volume IV, pages 149—335.

In somewhat greater detail, the slow release composition is formed from an effective amount of a slow release active agent, sufficient plaster to result in a slow dissolution of plaster in environmental water lasting throughout the temperate season, commonly 140 days in the case of pesticide compositions, from 5 to 140 days in the case of fertilizer-only compositions, sufficient amount of charcoal to prevent decomposition of the pesticide, if present, and to smooth the release of the active agent and sufficient water to make the composition workable in manufacture of the delivery means and to cause the mixture of composition and water to form a solid object which can be distributed throughout the environment.

The slow release solid delivery means produced from the composition of this invention can have essentially any regular or irregular three-dimensional shape including that of spheres, oblate spheres; polyhedra such as cubes, dodecahedrons, pyramids; cylinders, cones, truncated cones; pillows, briquettes, etc. The release rate of the active agent from the delivery means appears to be proportional to the delivery means' surface area. The surface area should range in the case of pesticide delivery means from 500 to 50,000 mm$^2$, preferably 1,500 to 25,000 m$^2$ and most preferably 2,500 to 7,500 m$^2$ depending on the concentration of the pesticide to the delivery means for reasons of economy and ease of handling. The surface area should range from 50 to 3,500 mm$^2$, preferably 150 to 2500 mm$^2$ and most preferably 300 to 750 mm$^2$ in the case of fertilizer delivery means depending on the concentration of the fertilizer in the means, for reasons of economy and ease of handling. The preferred form of the slow release delivery means is in the form of a cylinder having dimensions of from 3 to 40 millimetres in diameter, and 3 to 40 millimetres in depth, preferably from 3 to 20 millimetres, in the case of fertilizer delivery means and 10 to 100 millimetres in diameter, and 10 to 100 millimetres in depth in the case of pesticide delivery means.

The most preferred form of the slow release delivery means is in the form of a truncated cone. It has been found in methods for manufacturing the slow release delivery means that in most processes for moulding objects, the most difficult step is removing the objects from a form. It has been found that the form which leaves the moulding intact with minimum breakage is one which has the form of a truncated cone wherein the minor radius is formed at the bottom of the mould and the major radius is formed at the top. It has been found that for reasons of ease of moulding and balanced release of the slow release compositions, in the case of pesticide delivery means, the major diameter of the truncated cone should be 20 to 45 millimetres, the minor diameter of the truncated cone should be a diameter of 15 to 35 millimetres, and the cone should be from about 15 to 40 millimetres in depth, the cone commonly having from 6 to 120 grams of material. In the case of slow release fertilizer delivery means, the major diameter of the truncated cone should be from 6 to 30 millimetres, the minor diameter of the truncated cone should be a diameter of from 4 to 25 millimetres, and the cone should be from 5 to 20 millimetres in depth, the cone commonly having from 150 mg to 5 grams of material.

The most preferred form of the pest control delivery means for use with mosquito control comprises a truncated cone, including Altosid SR-10, having a major diameter of from 35 to 40 millimetres, a minor diameter of from 30 to 35 millimetres, a height of from 30 to 35 millimeters, a mass of from 35 to 45 grams and a total surface area of from 4,000 to 7,000 mm$^2$.

The most preferred embodiment of the fertilizer delivery means comprises a truncated cone, having an effective amount of a commercially available fertilizer, a major diameter of from 8 to 12 millimetres, a minor diameter of from 6 to 10 millimetres, a height of from 10 to 20 millimetres, a mass of from 250 to 1000 mg, and a total surface area of from 300 to 1,000 mm$^2$.

A composition of this invention can also be formed into bodies having a substantially irregular shape. However sufficient amount of the composition should be included in the bodies so that substantial concentrations of the active agent are present in the environment through a substantial portion of the temperate season.

A composition embodying this invention can comprise from 15 to 90 wt.%, preferably from 20 to 75 wt.% and most preferably from 35 to 55 wt.% plaster, depending on the length of the temperate season. For most practical consideration, a plaster content of from 30 to 90 wt.% has to be considered. The slow release composition can comprise 80 wt.% or less of an encapsulated active agent, preferably 70 wt.% or less of the encapsulated active control agent.

Most preferably, for reasons of economy, ease of handling and effectiveness, a pesticide composition can contain from 1 to 25 wt.%, preferably 2 to 15 wt.% of pest control agent. For achieving efficient mosquito control throughout the temperate season, a composition for such purpose preferably contains from 3 to 8 wt.% of the pest control agent. Alternatively, and especially when the pest control agent is an

6

insecticide, the amount of pesticide including encapsulating material will be less than 50 wt.%, preferably from 1 to 25 wt.%, most preferably from 3 to 16 wt.%.

For achieving efficient plant growth throughout the temperate season, a fertilizer composition preferably contains from 5 to 50 wt.% of the fertilizer. Alternatively the amount of fertilizer excluding any encapsulating material will be less than 50 wt.%, preferably from 1 to 45 wt.%, more preferably from 3 to 40 wt.%, most preferably from 3 to 16 wt.%.

The composition can comprise less than 10 wt.%, most preferably less than 8 wt.%, most preferably from 4 to 6 wt.% of charcoal or activated carbon in order to protect the pesticide, if present, and to control the release of the active agent. Sufficient water is added to the mixture of dry components to hydrate the plaster to bind the components together so that the composition can be formed into objects which can be distributed in the environment. Commonly an amount of water in the range of 25 to 50 wt.% of the composition can be present in the wet mix before moulding. The water can be derived from the active agent or can be added separately.

The use of compositions and delivery means embodying this invention will now be described.

Pest control, especially of insects

Depending on the insect season, control of insect populations can be maintained over varying time frames, depending on the surface area and composition of the delivery means distributed in the environment. Protection can be maintained for as little as 5 to 30 days and for as long as 150 days. A delivery means having from 10 to 20 grams of material can provide pest control for 30 to 80 days. A pest control delivery means having from 25 to 40 grams can provide a controlling amount of pest control agent for 80 to 150 days.

In general, it has been found that pest control means can be applied to a site at a rate of from 371 to 865 delivery means per hectare, (150 to 350 delivery means per acre), preferably 371 to 618 delivery means per hectare, (150 to 250 delivery means per acre), more preferably from 420 to 544 delivery means per hectare, (170 to 220 delivery means per acre), most preferably 445 to 494 delivery means per hectare, (180 to 200 delivery means per acre). Commonly the spacing of pest control delivery means at the breeding site can be from 3.048 to 9.144 m, (10 to 30 feet) between briquettes, preferably, from 4.572 to 7.62 m, (15 to 25 feet) most preferably from 4.27 to 6.096 m, (14 to 20 feet). The even distribution of the delivery means can be important in controlling mosquitoes through likely breeding territories where the topography is substantially unknown. In certain areas where the topography is more familiar, such a uniform distribution scheme is not absolutely necessary. In large areas of known topography where substantial water accumulates, it has been found that it is important to introduce sufficient pest control delivery means to provide a pest controlling amount of pesticide to the water, and the pest control delivery means do not have to be uniformly distributed. It is important that sufficient pest control delivery means are positioned at the deepest spot in the area which is to be treated so that during the presence of any standing water the pest control delivery means is exposed to the action of the water, thereby releasing pesticide. The balance of the pest control delivery means can be distributed almost in any fashion through the area. Keeping in mind that at least some pest control delivery means should be placed at a location such that as the area becomes immersed in water, sufficient pest control delivery means are present to release pest controlling amounts of pesticide into the water.

The pesticide delivery means can be distributed into the environment by hand, can be distributed from ground vehicles or boats, can be distributed by helicopter or other aircraft, or any other means ensuring a fairly even distribution of the delivery means into the environment. Pesticide delivery means of the invention can be distributed into any environmental location which is seasonally flooded or contains standing water during a substantial portion of the season. Typical wetland areas which can be treated using the pest control delivery means of the invention are seasonally flooded basin or flat sites typical of woodland areas having few aquatic plants or grasses. Such sites generally are flooded during the wetter periods of the temperate season. Inland fresh meadow areas contain standing water for greater periods of time during the year and are commonly characterised by the presence of reeds, canary grass or other plants common in a wetter environment. Inland shallow fresh water marshes are commonly muddy throughout the growing season with about 15.24 cm (6") of water, commonly characterised by the presence of cattail ranks, and grass across geogrphically depressed areas. Inland deep water, fresh water marshes commonly have water year around, pockets of open water permitting submerged aquatic plants to grow, and can have as much as 15.24 cm (6") to 91.44 cm (3 ft) of water permanently present. Inland open fresh water such as game lakes commonly have fresh water present at depths of greater than 3.048 m (10 ft) and can be characterised by depths free of vegetation while vegetation is commonly present in the shallows or at the water edge. The pest control means can be used in any of these wetland areas in order to control pest populations. Mosquitoes, for example, are most commonly produced in areas that are seasonally flooded or where the water depth fluctuates.

The pest control means can be applied to an environment that is substantially dry or wet. In a dry environment (no standing water) atmospheric humidity will result in little pesticide release. In wet environments (standing water) where the pest control means is immersed, water that induces decomposition will generally be environmental standing water. It is to be understood that decomposition is generally favoured and is most efficient in the presence of standing water.

7

Fertilizer delivery

Depending on the growing season and plant variety, fertilizer release can be maintained over varying time frames, depending on the surface area and composition of the fertilizer means distributed in the environment. Effective fertilizer release can be maintained for as little as 5—20 days and for as long as 150 days. A delivery means having from 150 to 800 mg of material can provide fertilizer release for 5 to 50 days. A fertilizer delivery means having from 0.5 to 5 grams can provide a controlling amount of pest control agent for 40 to 150 days.

In general, depending on the amount of fertilizer in the fertilizer delivery means, it has been found that the fertilizer delivery means can be applied to an agricultural site at a rate that provides 2.27 to 113.5 kg (5 to 250 pounds), preferably 2.27 to 22.7 kg (5 to 50 pounds) of nitrogen and/or 2.27 to 56.75 kg (5 to 125 pounds) of phosphorus (as $P_2O_5$) and/or up to 68.1 kg (150 pounds) of potassium and/or up to 454 kg (1,000 pounds) of calcium (depending on soil conditions) and/or up to 2270 kg (5,000 pounds) of magnesium, and/or about 0.0454 to 4.54 kg (0.1 to 10 pounds) of micro-nutrients per 0.4 ha (acre). The fertilizer delivery means of this invention is commonly distributed throughout an agricultural area before planting and is cultivated into the earth at a depth where it can come in contact with sufficient water in the soil in order to begin the dissolution of the plaster matrix. Commonly the fertilizer delivery means is not buried at a depth of greater than 17.75 to 25.4 cm (7 to 10 inches), since at greater depths fertilizer compounds would be substantially less available to growing plant root systems. Most commonly the fertilizer delivery means is placed on the soil and cultivated so that it is at least 2.54 cm (1 inch) below the surface and about 17.75 cm (7 inches) or less in depth, ensuring sufficient contact with water while the fertilizer delivery means releases the fertilizer at a controlled rate at a soil location convenient to root systems.

The fertilizer delivery means can likewise be distributed into the environment by hand, can be distributed from ground vehicles or boats, can be distributed by helicopter or other aircraft, or any other means ensuring a fairly even distribution in the environment. The fertilizer delivery means of the invention can be distributed into any agricultural soil which contains sufficient water to dissolve slowly the plaster.

Typical agricultural locations suitable for introduction of the fertilizer delivery means include fields for the production of corn, soybeans, wheat, rice, alfalfa, and other grains, fields for the production of produce such as tomatoes, cucumbers, lettuce, grapes, cabbage, peanuts, celery, etc., fruits such as oranges, grapefruit, lemons, apples, pears, berries, etc. Virtually any liquid or solid fertilizer, either encapsulated or nonencapsulated, can be incorporated into the fertilizer delivery means of the invention and can be distributed into the field.

The following examples illustrate this invention:

Example 1

Into a 56.78 dm³ (15 U.S. gallon) steel tank were placed 18.16 kg (40 pounds) of a mixture of granulated ammoniated superphosphate and potassium chloride (18-46-2) and 15.14 dm³ (4 U.S. gallons) of water. The mixture was agitated until a smooth slurry formed with a mortar mix paddle attached to a hand held drill driven at 800 rpm. 1.81 kg (4 lbs) Norit SG charcoal powder (Norit is a Registered Trade Mark) were added to the uniform slurry and the mixture was again agitated until uniform. 28.12 kg (62 lbs) of plaster (Diekeen dental plaster, compressive strength $9.49 \times 10^6$ kg/m² (13,500 psi), 3.098 dm³ (3.3 U.S. quarts) of water and 500 grams of plaster set accelerator (Terra Alba) were then added to the mixture. The mixture was agitated with the mortar mix paddle for eight minutes until fully mixed. The mixture was creamy within four minutes indicating that the plaster was fully wetted.

The slow release fertilizer mixture thus produced was poured onto an RTV rubber mould having 1100 individual moulds each in the form of a cylinder having approximate dimensions of 12 millimetres in diameter and 5 millimetres in height. Each of the moulds accepted about 600 to 650 mg of plaster material. After the plaster mixture had been added to the moulds, the plaster mixture was distributed throughout the mould sheet with a spatula, the mould was tapped to release trapped air, and the excess plaster was removed from the top of the mould with the float which also evened the material. The plaster objects in the moulds hardened within about one and one half hours and were popped from the rubber mould into a trough, and were then ready for bagging. The compressive strength of the objects ranged from $1.55 \times 10^5$ to $2.46 \times 10^5$ kg/m² (220—350 psi).

The application of such fertilizer delivery means to cultivated soil, at a rate bringing to the soil about 9.08 kg (20 pounds) of nitrogen, 5.59 kg (12 pounds) of phosphorus (as $P_2O_5$) and 4.54 kg (10 pounds) of potassium oxide per 0.4 ha (acre), slowly released the fertilizer throughout the first 70 days of the growing season, did not burn crop growth, did not harm root systems, and resulted in increased production.

Example 2

Into a 56.78 dm³ (15 U.S. gallon) steel tank were placed 18.93 dm³ (5 U.S. gallons) of a slurry of micro particulate encapsulated mosquito control agent isopropyl(2E,4E) - 11 - methoxy - 3,7,11 - trimethyl - 2,4 - dodecadienoate (Altosid SR-10, 5—10 µm particles, 10% slurry of micro encapsulated particles in water, 103 g/l (10.86 lb/gal) active). The slurry was mixed with a mortar mix paddle attached to a hand held drill driven at 800 rpm until the slurry was uniform. 1.81 kg (4 lbs) Norit®SG charcoal powder were added to the uniform slurry and the mixture was again agitated until uniform. 28.12 kg (62 lbs) of plaster (DieKeen [Rockeen] dental plaster, compressive strength $9.49 \times 10^6$ kg/m² (13,500 psi), 3.098 dm³ (3.3 U.S. quarts) distilled water and 500 grams of plaster set accelerator (Terra Alba) were then added to the mixture. The mixture was agitated with the mortar mix paddle for eight minutes until fully mixed. The mixture became creamy within four minutes indicating that the plaster was fully wetted.

The pest control mixture thus produced was poured onto an RTV rubber mould having 1100 individual moulds each in the form of a truncated cone having approximate dimensions of 37 millimetres in major diameter, 33 millimetres in minor diameter, and 31 millimetres in height. Each of the moulds accepted 40 grams of plaster material. After the plaster mixture had been added to the moulds, the plaster mixture was distributed throughout the mould sheet with a spatula, the mould was tapped to release trapped air, and the excess plaster was removed from the top of the mould with the float which also evened the material. The plaster objects in the moulds hardened within about one and one half hours and were popped from the rubber moulds into a trough, and were then ready for bagging. The compressive strength of the objects ranged from $1.55 \times 10^5$ to $2.46 \times 10^5$ kg/m² (220—350 psi).

Field trials were carried out using such pesticide delivery means as mosquito control means under aqueous conditions through adult emergence enabling the determination of cumulative mortality. Tests were conducted on floodwater *Aedes* species April to September inclusive. The results are set out in Table 1.

TABLE 1

| Dosage rate/ft² (0.093 m²) | Number of tests | Cumulative percent mortality in each test | Mean percent mortality |
|---|---|---|---|
| 1/64 | 1 | 100 | 100 |
| 1/100 | 2 | 100, 100 | 100 |
| 1/144 | 2 | 100, 100 | 100 |
| 1/156 | 4 | 100, 100, 100, 100 | 200 |
| 1/225 | 6 | 95, 100, 100, 100, 100, 99 | 100[1] |
| 1/256 | 3 | 98, 100, 98 | 99 |
| 1/289 | 1 | 100 | 100 |
| 1/306 | 6 | 84, 100, 96, 100, 97, 82 | 94 |
| 1/324 | 1 | 100 | 100 |
| 1/400 | 1 | 78 | 78 |

[1]In the first test which achieved 95 percent control the water was polluted from manure pile runoff, not a normal site. This test was discounted when computing the mean percent mortality.

A further series of field trials was carried out using the above pesticide delivery means as mosquito control means under aqueous conditions through adult emergence enabling the determination of cumulative mortality. Tests were conducted on floodwater *Aedes* species April to September inclusive. The results are set out in Table 2.

# 0 122 010

TABLE 2

| Dosage rate/ ft² (0.093 m²) | Date treated | Flood No. | Percent mortality | | | | | | | |
|---|---|---|---|---|---|---|---|---|---|---|
| | | | Instar | | | | Pupae | Adult | Cumlt. |
| | | | 1st | 2nd | 3rd | 4th | | | |
| 1/64 | 4/23 | 1 | Site dried up | | | | | | |
| | | 2 | | | | 1 | 99 | | 100 |
| 1/100 | 4/23 | 1 | | | | | 100 | | 100 |
| | 4/23 | 1 | | | | 68 | 32 | | 100 |
| 1/144 | 4/23 | 1 | | | | 26 | 72 | 2 | 100 |
| | 4/23 | 1 | | | | 45 | 49 | 6 | 100 |
| 1/156 | 6/6 | 1 | 100 | | | | | | 100 |
| | 6/6 | 1 | | | 65 | | 35 | | 100 |
| | 6/10 | 1 | | | | 25 | 75 | | 100 |
| | 6/10 | 1 | | | | 2 | 98 | | 100 |
| 1/225 | 5/20 | 1 | | | | 2 | 89 | 4 | 95 |
| | 5/20 | 1 | 100 | | | | | | 100 |
| | | 2 | Site dried up | | | | | | |
| | | 3 | 100 | | | | | | 100 |
| | | 4 | | | | 7 | 2 | 39 | 41 |
| | 6/5 | 1 | 100 | | | | | | 100 |
| | 6/6 | 1 | | | | 2 | 92 | 6 | 100 |
| | 6/7 | 1 | | | | 6 | 94 | | 100 |
| | 6/26 | 1 | | | | 28 | 68 | 3 | 99 |
| 1/256 | 6/27 | 1 | No data | | | | | | |
| | | 2 | Site dried with delayed development | | | | | | |
| | | 3 | | | | | 86 | 12 | 98 |
| | 7/29 | 1 | | | | 59 | 41 | | 100 |
| | | 2 | | | | 30 | 55 | 15 | 100 |
| | 8/8 | 1 | | | | 4 | 88 | 6 | 98 |
| 1/289 | 8/21 | 1 | | | | 100 | | | 100 |

10

# 0 122 010

TABLE 2 (contd.)

| Dosage rate/ ft² (0.093 m²) | Date treated | Flood No. | Percent mortality | | | | | | |
| --- | --- | --- | --- | --- | --- | --- | --- | --- | --- |
| | | | Instar | | | | Pupae | Adult | Cumlt. |
| | | | 1st | 2nd | 3rd | 4th | | | |
| 1/306 | 6/2 | 1 | | | | 3 | 51 | 30 | 84 |
| | | 2 | Site dried with delayed development | | | | | | |
| | | 3 | | | | 7 | 24 | 14 | 45 |
| | 6/6 | 1 | | | | | 100 | | 100 |
| | 6/6 | 1 | | | | 39 | 49 | 8 | 96 |
| | | 2 | | | | 95 | 3 | 2 | 100 |
| | | 3 | Site dried with delayed development | | | | | | |

An examination of Tables 1 and 2 clearly shows the effectiveness of the pest control means in obtaining 100% mortality in *Aedes* mosquito species during the temperate season. It is clear that at a rate of 1 pest control delivery means per 20.9 to 23.78 m² (225 to 256 square feet) or greater dosage rate, there is essentially 100% mortality of adult mosquitoes. It appears that at lesser dosage rates confidence in 100% mortality kills is reduced. Further, the mortality of the fourth Instar stage and pupae stage appear to be the primary killing mechanism for mosquitoes indicating the active ingredient in the pest control means indeed results in the death of the mosquito populations. Again, it is clear that at dosage rates of 1 pest control means per 20.9 to 23.78 m² (225 to 256 square feet), essentially 100% mosquito kills can be expected.

**Claims**

1. A pulverous composition for admixture with water and casting to undergo hardening in the presence of the water to yield a solid delivery means for controlled slow release of an active agent therein in the presence of environmental water to a site at which the composition, water hardened to form said solid delivery means, is applied, which composition comprises a plaster of paris having a compressive strength of at least $2.52 \times 10^6$ kg/m² (5000 lbs per square inch) when set, an effective electromagnetic radiation-absorbing amount of finely divided carbon particles and an effective amount of the active agent.

2. A composition as claimed in claim 1, wherein the plaster has a compressive strength when set of from $6.33 \times 10^6$ to $1.06 \times 10^7$ kg/m² (9,000 to 15,000 pounds per square inch).

3. A composition as claimed in claim 2, wherein the plaster has a compressive strength when set of from $7.03 \times 10^6$ to $9.84 \times 10^6$ kg/m² (10,000 to 14,000 pounds per square inch).

4. A composition as claimed in any preceding claim, which comprises the plaster in an amount of from 30 to 90 wt.%.

5. A composition as claimed in any preceding claim, which contains the finely divided carbon in an amount of from 1 to 15 wt.%.

6. A composition as claimed in any preceding claims, wherein the active agent is a pest control agent.

7. A composition as claimed in claim 6, wherein the pest control agent comprises an insecticide, a herbicide, an algicide, a molluscicide, or a fungicide.

8. A composition as claimed in claim 6 or 7, wherein the pest control agent is encapsulated.

9. A composition as claimed in claim 3, wherein the encapsulated pest control agent comprises an insecticide and the encapsulated pest control agent is present in the total composition at an amount of 50 wt.% or less.

10. A composition as claimed in claim 9, wherein the insecticide is a mosquito control agent.

11. A composition as claimed in claim 10, wherein the mosquito control agent comprises isopropyl(2E,4E) - 11 - methoxy - 3,7,11 - trimethyl - 2,4 - dodecadienoate.

12. A composition as claimed in any one of claims 6 to 11, wherein the pest control agent is present in the total composition in an amount of from 3 to 16 wt.%.

13. A composition as claimed in any one of claims 1 to 5, wherein the active agent is a fertilizer composition.

14. A composition as claimed in claim 13, wherein the fertilizer composition comprises a source of nitrogen, a source of phosphorus, a source of potassium, or a mixture of such sources.

15. A composition as claimed in claim 13 or 14, wherein the fertilizer composition is an encapsulated fertilizer composition.

11

# 0 122 010

16. A composition as claimed in claim 15, wherein the fertilizer composition is present in the total composition at an amount of 50 wt.% or less.

17. A composition as claimed in any one of claims 14 to 16, wherein the fertilizer composition comprises ammoniated superphosphate or ammonium diphosphate.

18. A composition as claimed in claim 1, wherein the fertilizer composition is present in the total composition in an amount of from 3 to 16 wt.%.

19. A solid delivery means for releasing, when in the presence of environmental water, a pest control agent at a site to which it has been delivered to exert its action at or in the vicinity of the site, which means comprises a composition as claimed in any one of claims 6 to 12 which has been cast while in the presence of a plaster hardening amount of water and is in the form of a shaped body which has a surface area of 500 to 50,000 mm$^2$.

20. A solid pest control delivery means as claimed in claim 19, wherein the surface area of the shaped body is from 1,500 to 25,000 mm$^2$.

21. A solid pest control delivery means as claimed in claim 20, wherein the surface area of the shaped body is from 2,500 to 7,500 mm$^2$.

22. A pest control delivery means as claimed in any one of claims 19 to 21, wherein the shaped body has a regular shape, being the shape in which said composition has been cast.

23. A pest control delivery means as claimed in claim 22, wherein the regular shape is a briquette, a pillow, a sphere, a prism, or a pyramid.

24. A pest control delivery means as claimed in claim 23, wherein the regular shape is a cylinder having dimensions of from 10 to 100 millimetres in diameter and from 10 to 100 millimetres in height.

25. A pest control delivery means as claimed in claim 23, wherein the regular shape is a truncated cone having dimensions of from 20 to 45 millimetres on the major diameter, from 15 to 35 millimetres on the minor diameter, and from 15 to 40 millimetres in height.

26. A pest control delivery means as claimed in claim 23, wherein the regular shape is a truncated cone having from 35 to 40 millimetres in the major diameter, from 30 to 35 millimetres in the minor diameter, and from 30 to 35 millimetres in height.

27. A solid pest control delivery means as claimed in claim 26, whose surface area is from 4,000 to 7,000 mm$^2$ and whose total mass is from 35 to 45 grams.

28. A method of controlling pest populations which comprises distributing solid pest control delivery means of any of claims 19 to 27, to a habitat for the pest population.

29. A method as claimed in claim 28, wherein the solid pest control delivery means are applied uniformly in the habitat in a distribution of from 371 to 618 pest control delivery means per hectare (150 to 250 per acre).

30. A method as claimed in claim 28 or 29, wherein the pest control delivery means are distributed to the habitat such that they are from 4.572 to 7.62 m (15 to 25 feet) apart.

31. A solid delivery means for releasing, when in the presence of environmental water, a fertilizer composition at a site to which it has been delivered to exert its action at the site, which means comprises a composition as claimed in any one of claims 13 to 18 which has been cast while in the presence of a plaster hardening amount of water and is in the form of a shaped body which has a surface area of from 50 to 3,500 mm$^2$.

32. A solid fertilizer delivery means as claimed in claim 31, wherein the surface area of the shaped body is from 150 to 2,500 mm$^2$.

33. A solid fertilizer delivery means as claimed in claim 32, wherein the surface area of the shaped body is from 300 to 750 mm$^2$.

34. A solid fertilizer delivery means as claimed in any one of claims 31 to 33, wherein the shaped body has a regular shape, being the shape in which said composition has been cast.

35. A solid fertilizer delivery means as claimed in claim 34, wherein the regular shape is a briquette, a pillow, a sphere, a prism, or a pyramid.

36. A solid fertilizer delivery means as claimed in claim 35, wherein the regular shape is a cylinder having dimensions of from 3 to 40 millimetres in diameter and from 3 to 40 millimetres in height.

37. A solid fertilizer delivery means as claimed in claim 35, wherein the regular shape is a truncated cone having dimensions of from 6 to 30 millimetres on the major diameter, from 4 to 25 millimetres on the minor diameter, and from 5 to 20 millimetres in height.

38. A fertilizer delivery means as claimed in claim 37, wherein the dimensions of the truncated cone are from 8 to 12 millimetres in the major diameter, from 6 to 10 millimetres in the minor diameter, and from 10 to 20 millimetres in height.

39. A solid pest control delivery means as claimed in claim 38, whose surface area is from 300 to 1,000 mm$^2$ and whose mass is from 250 to 1,000 milligrams.

40. A method of fertilizing agricultural land which comprises distributing the solid fertilizer delivery means of any of claims 31 to 39 to an agricultural or horticultural environment.

41. A method as claimed in claim 40, wherein the solid fertilizer delivery means are applied uniformly in the agricultural environment in a distribution providing from 2.27 to 113.5 kg (5 to 50 pounds) of nitrogen and/or 2.27 to 56.75 kg (5 to 125 pounds) of phosphorus and/or up to 68.1 kg (150 pounds) of potassium per 0.4 ha (acre).

# 0 122 010

42. A method as claimed in claim 40 or 41, wherein the solid fertilizer delivery means are distributed uniformly at a depth of less than 17.78 cm (7 inches) but greater than 2.54 cm (1 inch).

**Patentansprüche**

1. Pulverartige Zusammensetzung zur Beimischung mit Wasser und zum Gießformen zwecks Verfestigung in der Gegenwart von Wasser zum Erreichen eines festen Austragsmittels, zur kontrollierten langsamen Freigabe einer darin enthaltenen aktiven Wirkkomponente in der Gegenwart von Umgebungswasser an einer Stelle, an der die mit Wasser verfestigte Zusammensetzung, um diese festen Austragsmittel zu bilden, angewendet wird, wobei die Zusammensetzung einen Form-Gips enthält, der, sobald er abbindet, eine Druckfestigkeit von wenigstens $2,52 \times 10^6$ kg/m² (5.000 lbs pro Quadratinch), eine effektive elektromagnetische strahlenabsorbierende Menge an fein verteilten Kohlenstoffpartikeln und eine effektive Menge der aktiven Wirkkomponente aufweist.

2. Zusammensetzung nach Anspruch 1, bei der der Form-Gips, sobald er abbindet, eine Druckfestigkeit von $6,33 \times 10^6$ bis $1,06 \times 10^7$ kg/m² (9.000 bis 15.000 pounds pro Quadratinch) aufweist.

3. Zusammensetzung nach Anspruch 2, bei der der Form-Gips, sobald er abbindet, eine Druckfestigkeit von $7,03 \times 10^6$ bis $9,84 \times 10^6$ kg/m² (10.000 bis 14.000 pounds pro Quadratinch) aufweist.

4. Zusammensetzung nach irgendeinem der vorhergehenden Ansprüche, die den Form-Gips in einer Menge von 30 bis 90 Gew.-% enthält.

5. Zusammensetzung nach irgendeinem der vorhergehenden Ansprüche, die den fein verteilten Kohlenstoff in einer Menge von 1 bis 15 Gew.-% enthält.

6. Zusammensetzung nach irgendeinem der vorhergehenden Ansprüche, bei der die aktive Wirkkomponente ein Schädlingsbekämpfungsmittel ist.

7. Zusammensetzung nach Anspruch 6, bei der das Schädlingsbekämpfungsmittel eine Insektizid, eine Herbizid, ein Algizid, ein Molluskizid, oder ein Fungizid enthält.

8. Zusammensetzung nach Anspruch 6 oder 7, bei der das Schädlingsbekämpfungsmittel eingekapselt ist.

9. Zusammensetzung nach Anspruch 3, bei der das eingekapselte Schädlingsbekämpfungsmittel ein Insektizid enthält und das eingekapselte Schädlingsbekämpfungsmittel in der gesamten Zusammensetzung in einer Menge von 50 Gew.-% oder weniger vorhanden ist.

10. Zusammensetzung nach Anspruch 9, bei der das Insektizid ein Moskitobekämpfungsmittel ist.

11. Zusammensetzung nach Anspruch 10, bei der das Moskitobekämpfungsmittel Isopropyl (2E,4E) - 11 - methoxy - 3,7,11 - trimethyl - 2,4 - dodecadienoat enthält.

12. Zusammensetzung nach irgendeinem der Ansprüche 6 bis 11, bei der das Schädlingsbekämpfungsmittel in der gesamten Zusammensetzung in einer Menge von 3 bis 16 Gew.-% vorhanden ist.

13. Zusammensetzung nach irgendeinem der Ansprüche 1 bis 5, bei der die aktive Wirkkomponente eine Düngerzusammensetzung ist.

14. Zusammensetzung nach Anspruch 13, bei der die Düngerzusammensetzung eine Stickstoffquelle, eine Phosphorquelle, eine Kaliumquelle oder eine Mischung derartiger Quellen enthält.

15. Zusammensetzung nach Anspruch 13 oder 14, bei der die Düngerzusammensetzung eine eingekapselte Düngerzusammensetzung ist.

16. Zusammensetzung nach Anspruch 15, bei der die Düngerzusammensetzung in der gesamten Zusammensetzung in einer Menge von 50 Gew.-% oder weniger anwesend ist.

17. Zusammensetzung nach irgendeinem der Ansprüche 14 bis 16, bei der die Düngerzusammensetzung Superphosphatsalmiak oder Ammoniumdiphosphat enthält.

18. Zusammensetzung nach Anspruch 1, bei der die Düngerzusammensetzung in der gesamten Zusammensetzung in einer Menge von 3 bis 16 Gew.-% anwesend ist.

19. Festes Austragsmittel zur Freisetzung, in der Gegenwart von Umgebungswasser, eines Schädlingsbekämpfungsmittels an einer Stelle, an der man es freisetzt, das an oder in der Nähe der Stelle seine Wirkung zeigt, wobei das Mittel eine Zusammensetzung nach irgendeinem der Ansprüche 6 bis 12 enthält, die man in Gegenwart einer Wassermenge, die ausreicht, um Gips zu verfestigen, in Form gießt und die die Gestalt eines geformten Körpers hat, der eine Oberfläche von 500 bis 50.000 mm² aufweist.

20. Festes Schädlingsbekämpfungs-Austragsmittel nach Anspruch 19, bei dem die Oberfläche des geformten Körpers von 1.500 bis 25.000 mm² ist.

21. Festes Schädlingsbekämpfungs-Austragsmittel nach Anspruch 20, bei dem die Oberfläche des geformten Körpers von 2.500 bis 7.500 mm² ist.

22. Schädlingsbekämpfungs-Austragsmittel nach irgendeinem der Ansprüche 19 bis 21, bei dem der geformte Körper eine gleichmäßige Gestalt aufweist, die die Gestalt hat, in welche man die Zusammensetzung in Form gießt.

23. Schädlingsbekämpfungs-Austragsmittel nach Anspruch 22, bei dem die regelmäßige Gestalt eine Brikett, ein Kissen, eine Kugel, ein Prisma, oder eine Pyramide ist.

24. Schädlingsbekämpfungs-Austragsmittel nach Anspruch 23, bei dem die regelmäßige Gestalt ein Zylinder ist, der die Abmessungen von 10 bis 100 mm im Durchmesser und von 10 bis 100 mm in der Höhe aufweist.

25. Schädlingsbekämpfungs-Austragsmittel nach Anspruch 23, bei dem die gleichmäßige Gestalt ein

13

Kegelstumpf ist, der einen größeren Durchmesser von 20 bis 45 mm, einen kleineren Durchmesser von 15 bis 35 mm und eine Höhe von 15 bis 40 mm aufweist.

26. Schädlingsbekämpfungs-Austragsmittel nach Anspruch 23, bei dem die gleichmäßige Gestalt ein Kegelstumpf ist, der im größeren Durchmesser von 35 bis 40 mm, in kleineren Durchmesser von 30 bis 35 mm, und in der Höhe von 30 bis 35 mm aufweist.

27. Festes Schädlingsbekämpfungs-Austragsmittel nach Anspruch 26, dessen Oberfläche von 4.000 bis 7.000 mm² und dessen gesamte Masse von 35 bis 45 g beträgt.

28. Verfahren zur Bekämpfung von Schädlingspopulationen, das die Verbreitung von festen Schädlingsbekämpfungsaustragsmitteln nach irgendeinem der Ansprüche 19 bis 27 in einen Lebensraum der Schädlingspopulation enthält.

29. Verfahren nach Anspruch 28, bei dem die festen Schädlingsbekämpfungs-Austragsmittel gleichförmig in diesem Lebensraum in einer Verteilung von 371 bis 618 Schädlingsbekämpfungs-Austragsmitteln pro ha (150 bis 250 pro acre) angewendet werden.

30. Verfahren nach den Ansprüchen 28 oder 29, bei dem die Schädlingsbekämpfungs-Austragsmittel derart in diesem Lebensraum verteilt werden, daß sie von 4,572 bis 7,62 m (15 bis 25 Fuß) auseinander sind.

31. Festes Austragsmittel zur Freisetzung, in der Gegenwart von Umgebungswasser einer Düngerzusammensetzung an einer Stelle, an der man sie freisetzt, die ihre Wirkung an dieser Stelle zeigt, wobei das Mittel eine Zusammensetzung nach irgendeinem der Ansprüche 13 bis 18 enthält, die man in der Gegenwart einer Wassermenge, die ausreicht, um einen Gips zu verfestigen, in Form gießt und die die Gestalt eines geformten Körpers hat, der eine Oberfläche von 50 bis 3.500 mm² aufweist.

32. Festes Dünger-Austragsmittel nach Anspruch 31, bei dem die Oberfläche des geformten Körpers von 150 bis 2.500 mm² ist.

33. Festes Dünger-Austragsmittel nach Anspruch 32, bei dem die Oberfläche des geformten Körpers von 300 bis 750 mm² ist.

34. Festes Dünger-Austragsmittel nach irgendeinem der Ansprüche 31 bis 33, bei dem der geformte Körper eine gleichmäßige Gestalt aufweist, die die Gestalt hat, in welche man die Zusammensetzung in Form gießt.

35. Festes Dünger-Austragsmittel nach Anspruch 34, bei dem die gleichmäßige Gestalt eine Brikett, ein Kissen, eine Kugel, ein Prisma, oder eine Pyramide ist.

36. Festes Dünger-Austragsmittel nach Anspruch 35, bei dem die gleichmäßige Gestalt ein Zylinder ist, der die Abmessungen von 3 bis 40 mm im Durchmesser und von 3 bis 40 mm in der Höhe aufweist.

37. Festes Dünger-Austragsmittel nach Anspruch 35, bei dem die gleichmäßige Gestalt ein Kegelstumpf ist, der die Abmessungen von 6 bis 30 mm im größeren Durchmesser, von 4 bis 25 mm im kleineren Durchmesser und von 5 bis 20 mm in der Höhe aufweist.

38. Dünger-Austragsmittel nach Anspruch 37, bei dem die Abmessungen des Kegelstumpfes von 8 bis 12 mm im größeren Durchmesser, von 6 bis 10 mm im kleineren Durchmesser und von 10 bis 20 mm in der Höhe sind.

39. Festes Schädlingsbekämpfungs-Austragsmittel nach Anspruch 38, dessen Oberfläche von 300 bis 1.000 mm² und dessen Masse von 250 bis 1.000 mg ist.

40. Verfahren zur Düngang von landwirtschaftlichen Flächen, das die Verteilung von festem Dünger-Austragsmittel nach irgendeinem der Ansprüche 31 bis 39 in einer landwirtschaftlichen oder gartenbaulichen Umgebung enthält.

41. Verfahren nach Anspruch 40, bei dem die festen Dünger-Austragsmittel gleichförmig in der landwirtschaftlichen Umgebung in einer Verteilung, die von 2,27 bis 113,5 kg (5 bis 50 pounds) Stickstoff und/oder 2,27 bis 56,75 kg (5 bis 125 pounds) Phosphor und/oder bis zu 68,1 kg (150 pounds) Kalium pro 0,4 ha (acre) zur Verfügung stellt, angewendet werden.

42. Verfahren nach den Ansprüchen 40 oder 41, bei dem die festen Dünger-Austragsmittel gleichförmig bis zu einer Tiefe von weniger als 17,78 cm (7 inches) aber mehr als 2,54 cm (1 inch) verteilt werden.

**Revendications**

1. Composition pulvérulente à mélanger avec de l'eau et à mouler pour qu'elle subisse un durcissement en présence de l'eau pour donner un moyen de distribution à l'état solide pour la libération lente contrôlée d'un agent actif qui y est contenu, en présence de l'eau environnante sur un site sur lequel on applique la composition, durcie à l'eau pour former ledit moyen de distribution à l'état solide, ladite composition comprenant un plâtre de Paris ayant une résistance à la compression d'au moins $2{,}52 \times 10^6$ kg/m² (5000 livres par pouce carré) une fois pris, une quantité, efficace pour l'absorption du rayonnement électromagnétique, de particules de carbone finement divisées et une quantité efficace de l'agent actif.

2. Composition selon la revendication 1, dans laquelle le plâtre possède une résistance à la compression, une fois pris, comprise entre $6{,}33 \times 10^6$ et $1{,}06 \times 10^7$ kg/m² (9000 à 15000 livres par pouce carré).

3. Composition selon la revendication 2, dans laquelle le plâtre possède une résistance à la

**0 122 010**

compression, une fois pris, comprise entre $7,03 \times 10^6$ et $9,84 \times 10^6$ kg/m² (10000 à 14000 livres par pouce carré).

4. Composition selon l'une quelconque des revendications précédentes, qui comprend le plâtre en une quantité comprise entre 30 et 90% en poids.

5. Composition selon l'une quelconque des revendications précédentes, qui contient le carbone finement divisé en une quantité comprise entre 1 et 15% en poids.

6. Composition selon l'une quelconque des revendications précédentes, dans laquelle l'agent actif est un agent de lutte contre des agents nuisibles.

7. Composition selon la revendication 6, dans laquelle l'agent de lutte contre les agents nuisibles comprend un insecticide, un herbicide, un algicide, un molluscicide ou un fongicide.

8. Composition selon la revendication 6 ou 7, dans laquelle l'agent de lutte contre les agents nuisibles est encapsulé.

9. Composition selon la revendication 3, dans laquelle l'agent de lutte contre les agents nuisibles, encapsulé, comprend un insecticide et dans laquelle l'agent de lutte contre les agents nuisibles, encapsulé, est présent dans la composition totale en une quantité de 50% en poids ou moins.

10. Composition selon la revendication 9, dans laquelle l'insecticide est un agent de lutte contre les moustiques.

11. Composition selon la revendication 10, dans laquelle l'agent de lutte contre les moustiques comprend le (2E,4E) - 11 - méthoxy - 3,7,11 - triméthyl - 2,4 - dodécadiénoate d'isopropyle.

12. Composition selon l'une quelconque des revendications 6 à 10, dans laquelle l'agent de lutte contre les agents nuisibles est présent dans la composition totale en une quantité comprise entre 3 et 16% en poids.

13. Composition selon l'une quelconque des revendications 1 à 5, dans laquelle l'agent actif est une composition fertilisante.

14. Composition selon la revendication 13, dans laquelle la composition fertilisante comprend une source d'azote, une source de phosphore, une source de potassium ou un mélange de telles sources.

15. Composition selon la revendication 13 ou 14, dans laquelle la composition fertilisante est une composition fertilisante encapsulée.

16. Composition selon la revendication 15, dans laquelle la composition fertilisante est présente dans la composition totale en une quantité de 50% en poids ou moins.

17. Composition selon l'une quelconque des revendications 14 à 16, dans laquelle la composition fertilisante comprend du superphosphate ammoniaqué ou du diphosphate d'ammonium.

18. Composition selon la revendication 1, dans laquelle la composition fertilisante est présente dans la composition totale en une quantité comprise entre 3 et 16% en poids.

19. Moyen de distribution à l'état solide pour la libération, lorsqu'il est en présence d'eau environnante, d'un agent de lutte contre des agents nuisibles dans un site sur lequel on l'a placé pour qu'il exerce son action ou à proximité du site, ce moyen comprenant une composition selon l'une quelconque des revendications 6 à 12, qui a été moulée en présence d'une quantité d'eau pour le durcissement du plâtre et qui se présente sous la forme d'un corps façonné qui possède une aire comprise entre 500 et 50000 mm².

20. Moyen de distribution à l'état solide pour la lutte contre des agents nuisibles selon la revendication 19, dans lequel l'aire du corps façonné est comprise entre 1500 et 25000 mm².

21. Moyen de distribution à l'état solide, pour la lutte contre des agents nuisibles, selon la revendication 20, dans lequel l'aire du corps façonné est comprise entre 2500 et 7500 mm².

22. Moyen de distribution pour la lutte contre des agents nuisibles selon l'une quelconque des revendications 19 à 21, dans lequel le corps façonné possède une forme régulière qui est la forme dans laquelle ladite composition a été moulée.

23. Moyen de distribution pour la lutte contre les agents nuisibles selon la revendication 22, dans lequel la forme régulière est une briquette, un coussin, une sphère, un prisme ou une pyramide.

24. Moyen de distribution pour la lutte contre des agents nuisibles selon la revendication 23, dans lequel la forme régulière est un cylindre ayant pour dimensions un diamètre compris entre 10 et 100 millimètres et une hauteur comprise entre 10 et 100 millimètres.

25. Moyen de distribution pour la lutte contre des agents nuisibles selon la revendication 23, dans lequel la forme régulière est un cône tronqué ayant pour dimensions de 20 à 45 millimètres pour le plus grand diamètre, de 15 à 35 millimètres pour le plus petit diamètre et de 15 à 40 millimètres de hauteur.

26. Moyen de distribution pour la lutte contre des agents nuisibles selon la revendication 23, dans lequel la forme régulière est un cône tronqué ayant de 35 à 40 millimètres pour le plus grand diamètre, de 30 à 35 millimètres pour le plus petit diamètre, et de 30 à 35 millimètres de hauteur.

27. Moyen de distribution à l'état solide pour la lutte contre des agents nuisibles selon la revendication 26, dont l'aire est comprise entre 4000 et 7000 mm² et dont la masse totale est comprise entre 35 et 45 grammes.

28. Procédé pour lutter contre des populations nuisibles qui comprend la distribution du moyen de distribution à l'état solide, pour la lutte contre des agents nuisibles, selon l'une des revendications 19 à 27, dans un habitat de la population nuisible.

29. Procédé selon la revendication 28, dans lequel on applique le moyen de distribution à l'état solide,

15

pour la lutte contre des agents nuisibles, uniformément dans l'habitat, en une distribution allant de 371 à 618 moyens de distribution pour la lutte contre les agents nuisibles par hectare (150 à 250 par acre).

30. Procédé selon la revendication 28 ou 29, dans lequel les moyens de distribution pour la lutte contre des agents nuisibles sont distribués dans l'habitat de telle sorte qu'ils soient distants de 4,572 à 7,62 m (15 à 25 pieds).

31. Moyen de distribution à l'état solide pour la libération, lorsqu'il est en présence de l'eau environnante, d'une composition d'engrais sur un site dans lequel on l'a placé pour qu'il exerce son action dans le site, ce moyen comprenant une composition selon l'une quelconque des revendications 13 à 18 qui a été moulée en présence d'une quantité d'eau pour le durcissement du plâtre et qui se présente sous la forme d'un corps façonné qui possède une aire comprise entre 50 et 3500 mm².

32. Moyen de distribution, à l'état solide, d'un engrais selon la revendication 31, dans lequel l'aire du corps façonné est comprise entre 150 et 2500 mm².

33. Moyen de distribution, à l'état solide, d'un engrais selon la revendication 32, dans lequel l'aire du corps façonné est comprise entre 300 et 750 mm².

34. Moyen de distribution, à l'état solide, d'un engrais selon l'une quelconque des revendications 31 à 33, dans lequel le corps façonné possède une forme régulière qui est la forme dans laquelle ladite composition a été moulée.

35. Moyen de distribution, à l'état solide, d'un engrais selon la revendication 34, dans lequel la forme régulière est une briquette, un coussin, une sphère, un prisme ou une pyramide.

36. Moyen de distribution, à l'état solide, d'un engrais selon la revendication 35, dans lequel la forme régulière est un cylindre ayant pour dimensions in diamètre compris entre 3 et 40 millimètres et une hauteur comprise entre 3 et 40 millimètres.

37. Moyen de distribution, à l'état solide, d'un engrais, selon la revendication 35, dans lequel la forme régulière est un cône tronqué ayant pour dimensions de 6 à 30 millimètres pour le plus grand diamètre, de 4 à 25 millimètres pour le plus petit diamètre et de 5 à 20 millimètres de hauteur.

38. Moyen de distribution d'un engrais selon la revendication 37, dans lequel les dimensions du cône tronqué sont de 8 à 12 millimètres pour le diamètre le plus grand, de 6 à 10 millimètres pour le diamètre le plus petit et de 10 à 20 millimètrres pour la hauteur.

39. Moyen de distribution, à l'état solide, pour la lutte contre des agents nuisibles, selon la revendication 38, dont l'aire est comprise entre 300 et 1000 mm² et dont la masse est comprise entre 250 et 1000 milligrammes.

40. Procédé pour la fertilisation des terres agricoles qui comprend la distribution des moyens de distribution, à l'état solide, d'engrais, selon l'une quelconque des revendications 31 à 39, dans un environnement agricole ou horticole.

41. Procédé selon la revendication 40, dans lequel on applique les moyens de distribution, à l'état solide, d'engrais, uniformément dans l'environnement agricole, selon une distribution qui fournit de 2,27 à 113,5 kg (5 à 50 livres) d'azote et/ou de 2,27 à 56,75 kg (5 à 125 livres) de phosphore et/ou jusqu'à 68,1 kg (150 livres) de potassium par 0,4 ha (acre).

42. Procédé selon la revendication 40 ou 41, dans lequel les moyens de distribution, à l'état solide, d'engrais, sont distribués uniformément à une profondeur inférieure à 17,78 cm (7 pouces) mais supérieure à 2,54 cm (1 pouce).